# EUROPEAN PATENT APPLICATION

(11) **EP 1 010 972 A1**
(43) Date of publication of application: **21.06.2000**
(21) Application number: 99123968.2
(22) Date of filing: 06.12.1999
(51) Int. Cl.: G01G 19/393, B65G 69/04, B65B 37/18

(54) **Device for loading and distributing articles in a packaging machine**

(30) Priority: 17.12.1998 IT MI982719
(71) Applicant: SIMIONATO S.p.A., 35035 Mestrino (Padova) (IT)
(72) Inventor: Simionato, Paolo, 35100 Padova (IT)
(74) Representative: Petruzzelli, Antonio European Patent Attorney

(57) **Abstract**

In an assembly (1) for distribution of loose articles in a bagging machine, comprising a load hopper (11) centered on a underlying series of vibrating channels (13) placed in a sunburst configuration for transfer of the loose articles to a section of collection of the loose articles, a distributor (15) placed between said hopper (11) and said series of vibrating channels (13) in a position centered in respect of said series of vibrating channels (13) comprising a substantially conical surface (25) of sliding for the articles widening downwards, and a series of radial tubes (27) sloping downwards peripherically placed at the base of said surface (25) of sliding for the articles so as to convey the articles coming from said surface (25) of sliding for the articles to said series of vibrating channels (13).

## Description

The present invention relates to a distributor in an assembly for distribution of loose articles in an automated bagging machine.

It is known that loose articles to be bagged are loaded into the machine via an upper hopper which conveys the articles directly towards radial channels arranged in a sunburst configuration and vibrated in order to transfer the articles to a peripheral collection portion, formed by the upper row of baskets of a weighing unit. The loose articles are then weighed and finally sent to the appropriate packaging unit.

Alternatively, the Italian patent applications no. MI93A001502 and MI95A001762 provide for the possibility of inserting between the upper loading hopper and the vibrating radial channels one or more rotating conveyor belts which receive the loose articles from the hopper and in turn distribute them evenly on all the vibrating radial channels.

All traditional distribution systems nevertheless have a serious limitation when very small articles have to be bagged, for example rice, millet and many types of legumes.

In these cases some articles, small and light, which, after falling freely from the loading hopper, hit against the base of the rotating conveyor belts, if provided, or against the base of the vibrating radial channels, or even against other articles, may go and scatter in the surrounding area.

In particular some articles are projected into the spaces which, in constructional terms, open between various parts of the distribution assembly, and may become wedged in any interstice, even at times jeopardising proper working of the distribution assembly.

This situation, as a result, leads to a waste of articles which deviate from the path which takes them from the upper loading hopper to the peripheral collection portion and are thus lost.

The object of the present invention is that of providing a distribution device in a bagging machine which avoids the disadvantages suffered in traditional systems, and in particular a distribution device which allows even very small articles to be distributed to the weighing unit without waste caused by articles which leave, in an uncontrolled manner, the path which takes them to the peripheral collection portion.

Another object of the present invention is that of providing a distribution device wherein the quantity of loose articles to be sent to the weighing unit can be controlled and regulated.

Yet another object of the present invention is that of providing a distribution device with a simple structure and working mechanism, so that it is also inexpensive.

These objects are achieved by an assembly for distribution of loose articles in a bagging machine, comprising a load hopper centered on a underlying series of vibrating channels placed in a sunburst configuration for transfer of the loose articles to a section of collection of the loose articles, wherein a distributor placed between said hopper and said series of vibrating channels in a position centered in respect of said series of vibrating channels comprises a substantially conical surface of sliding for the articles widening downwards, and a series of radial tubes sloping downwards peripherically placed at the base of said surface of sliding for the articles so as to convey the articles coming from said surface of sliding for the articles to said series of vibrating channels.

The use in the present invention of radial tubes, in particular downward slanting radial tubes, and a sliding surface integral with said radial tubes, is definitely advantageous as it allows the articles to be sent towards the vibrating radial channels and at the same time to contain them inside the tubes, without them being allowed any way of escaping towards the surrounding area.

The present invention will be made clearer from the description of a preferred embodiment which will be shown by way of a non-limiting example of the more general concept claimed.

The present preferred embodiment refers to the accompanying drawings, in which:
Fig. 1 is a schematic side view of a bagging machine which uses the distribution device of the present invention.
Fig. 2 is an enlarged view from above of the distribution device according to the present invention.
Fig. 3 is an enlarged view from below of the distribution device according to the present invention.
Fig. 4 shows a part of the distribution assembly also comprising the element for regulation of the quantity of articles to be sent to the weighing unit.

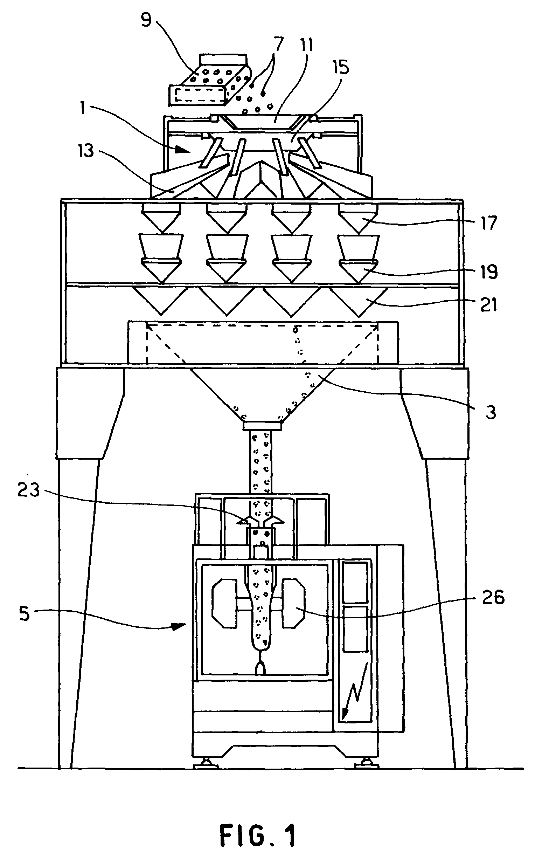

In Fig. 1, a bagging machine, which in the distribution assembly uses the distributor of the present invention, also comprises a weighing unit and a conveyor 3 of the weighed articles towards a packaging unit 5.

The articles 7 to be bagged are fed by a conveyor belt 9 to the central upper loading hopper 11 to be distributed, as we will see in detail hereinbelow, to the vibrating radial channels 13 via the distributor of the present invention.

The vibrating radial channels 13 send the articles 7 to the upper row 17 of baskets of the weighing unit, known as pre-batching baskets, which, on a timed command from a processor, open the lower mouths to feed the underlying row 19 of baskets, known as weighing baskets.

The weighing baskets weigh the articles contained therein by means of an appropriate loading cell, and the weighing information is sent to the processor.

At this point the articles 7 are discharged into the lower row 21 of baskets of the weighing unit, known as auxiliary baskets, so that, when the sum of weights recorded by the processor in a random combination of auxiliary baskets equals a preset weight value, the processor commands the opening of the lower mouths of the auxiliary baskets which make up the combination.

The articles 7 thus weighed are collected by the conveyor 3 and sent to the packaging unit 5 where they fill a sliding tubular strip 23, later sealed by suitable welding means 26.

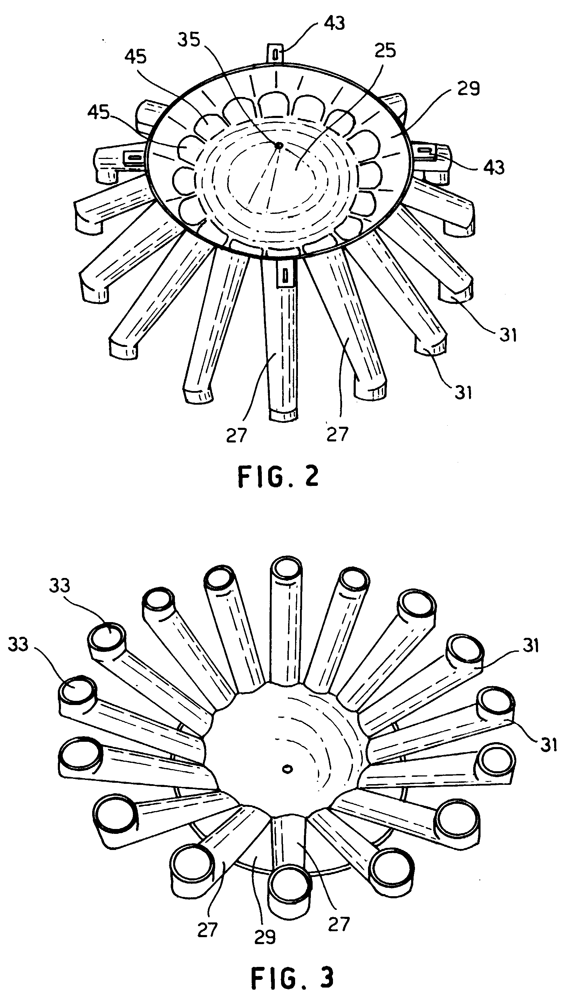

The distributor 15 inside the assembly for distribution, denoted by reference numeral 1, of the loose articles 7 is made entirely from a metal material and has, as shown in the embodiment of Figs. 2 and 3, a configuration similar to an octopus, and for this reason it is indicated as an "octopus" distributor.

Specifically the distributor 15 comprises a conical surface 25 which widens downwards, and a series of radial tubes 27 which extend in a sunburst configuration from a truncated cone band 29, widening upwards.

In general, instead of conical surface 25, a substantially conical surface, i.e. a surface having an axis of symmetry and a circular or poligonal shaped base, opposed to the vertex could be suitable for the present invention.

The tip 35 of the conical sliding surface 25 is advantageously arranged immediately below the lower end of the hopper (not shown in Figs. 2 and 3) in such a way that the articles, after a brief section of vertical free falling from the hopper, hit the conical sliding surface of the distributor 15 with such low kinetic energy that any short rebound makes them always fall back in any case on the conical sliding surface 25, without the possibility of bouncing and becoming lost outside thereof.

The size of the circular base of the conical surface 25 is identical to that of the smaller base of the truncated cone band 29, in such a way that the conical surface 25, after having been inserted axially in the truncated cone band 29, can be attached by welding of the circular edge of its base onto the inferior circular edge of the smaller base of the same truncated cone band 29.

Therefore the truncated cone band 29 keeps the radial tubes 27 joined one to the other and attaches them in turn to the conical surface 25.

The dimensions of the band 29 must also allow all those articles coming from the conical surface 25 which do not directly hit the inlet mouth 45 of the radial tubes 27 to be intercepted and returned to the radial tubes 27. For this reason provision is made for the band 29 to have a safety height which extends for a section above the inlet mouths 45 of the radial tubes 27.

The series of radial tubes 27 also extends from the truncated cone band 29 with the same slant provided by the angular opening which the conical surface 25 forms with its axis of symmetry.

In this way the articles which slide from the conical surface 25 reach without difficulty each radial tube 27, without accumulating and blocking the inlet of the same tubes 27.

The end portion 31 of each tube 27 of the distributor 15 is bent in a direction parallel to the axis of symmetry of the distributor 15 in such a way that the articles coming from the distributor 15 are deposited only near the portions of the radial channels 13 below the outlet mouths 33 of the radial tubes 27, without scattering excessively elsewhere.

Later the radial channels 13 will be vibrated in order to move the articles along the same channels 13 and then insert them in the upper row 17 of the pre-batching baskets of the weighing unit.

The slant of the conical surface 25 and of the radial tubes 27 is the optimal one for allowing portions of articles accumulated in the tubes 27 of the distributor 15 to be drawn, forced by their own weight, towards the outlet mouth 33 of the radial tubes 27 to replace the underlying portions of articles transported to the pre-batching baskets through the vibration of the radial channels 13.

Advantageously moreover the outlet mouth 33 of the tubes 27 faces onto a central section of the radial channels 13, sufficiently distanced from both ends of the radial channels 13 to prevent some articles, leaving the outlet mouths 33 of the distributor 15, from going down the channels 13 again, through inertia, and reaching directly, and in an uncontrolled manner, the pre-batching baskets of the weighing unit, or from rising up the channels 13 completely and becoming lost outside thereof.

The structure of the distributor 15 is clearly symmetrical, having to reproduce the symmetrical arrangement of the series of vibrating radial channels 13. A radial tube 27 has to feed a corresponding radial channel 13, irrespective of the number of radial channels 13 provided.

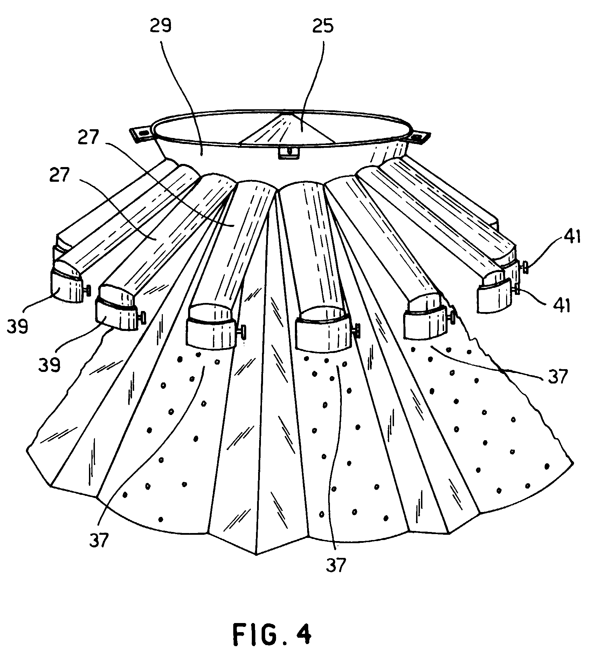

In this preferred embodiment a distributor with sixteen tubes 27 has been provided for the sixteen channels 13, but it is also possible to vary the number thereof and in particular to reduce it at most to eight, without detriment to the correspondence between the number of tubes 27 and number of channels 13. In Fig. 4, the outlet mouth 33 of the bent end portion 31 of each radial tube 27 is positioned at a preset distance from the base of the corresponding vibrating radial channel 13, and faces onto a substantially central section 37 of the same channel 13.

Given that the quantity of articles fed to the vibrating channels also depends on the distance between each outlet mouth 33 of the distributor 15 and the base of the corresponding radial channel 13 below, on each bent end portion 31 a special regulation part is provided which allows this distance to be altered.

More particularly the regulation part is formed by an annular extension 39 of the bent end portion 31 and is mounted, vertically sliding, on the external wall of the latter 31.

The annular extension 39 is protractile from the end of the end portion 31 towards the base of the corresponding vibrating radial channel below 13, so that the distance of the outlet mouth 33 of each bent end portion 31 from the base of the corresponding vibrating radial channel 13 can be reduced as required.

In order to regulate the height of the outlet mouth 33 of the distributor 15, each annular extension 31 is moved, in a wholly known manner, by a mechanism (not shown) driven by an adjustment screw 41 which can be actuated manually. The distributor 15 is held in position by means of a system of flanges 43 screwed to the support framework of the bagging machine.

In this way the distributor 15 can easily be removed from the bagging machine in the situations wherein it is no longer required, that is to say when the articles to be bagged are not too small.

It is understood that changes can be made to the distributor made in this way without thereby departing from the sphere of the present invention.

It could for example also be foreseen to use as a regulation part a gate valve controlled manually or automatically for gradually closing the outlet mouth of the radial tubes.

## Claims

1. In an assembly (1) for distribution of loose articles in a bagging machine, comprising a load hopper (11) centered on a underlying series of channels (13) placed in a sunburst configuration for transfer of the loose articles to a section of collection of the loose articles, a distributor (15) placed between said hopper (11) and said series of channels (13) in a position centered in respect of said series of channels (13) characterised in that it (15) comprises a substantially conical surface (25) of sliding for the articles widening downwards, and a series of radial tubes (27) sloping downwards peripherically placed at the base of said surface (25) of sliding for the articles so as to convey the articles coming from said surface (25) of sliding for the articles to said series of channels (13).

2. In an assembly for distribution of loose articles in a bagging machine a distributor according to the previous claim, characterised in that an element is provided which keeps the tubes of said series of radial tubes (27) joined one to the other.

3. In an assembly for distribution of loose articles in a bagging machine a distributor according to claim 2, characterised in that said element which keeps said tubes joined together is in the form of a truncated cone band (29) widening upwards, wherefrom said radial tubes (27) extend in a sunburst configuration.

4. In an assembly for distribution of loose articles in a bagging machine a distributor according to the previous claim, characterised in that said truncated cone band (29) is integral with said surface (25) of sliding for the articles.

5. In an assembly for distribution of loose articles a distributor according to claim 4, characterised in that said sliding surface (25) and said truncated cone band (29) are integral by welding the base adge of the surface (25) of sliding for the articles with the inferior edge of said truncated cone band (29).

6. In an assembly for distribution of loose articles a distributor according to claims from 3 to 5, characterised in that said band (29) extends in height for a section above the inlet mouths (45) of said radial tubes (27) in such a way as to intercept the articles coming from said sliding surface (25) which do not hit directly the inlet mouth (45) of said radial tubes (27).

7. In an assembly for distribution of loose articles in a bagging machine a distributor according to any one of the previous claims, characterised in that said series of tubes (27) extends with the same slant given by the angular opening of said surface (25) of sliding for the articles.

8. In an assembly for distribution of loose articles in a bagging machine a distributor according to any one of the previous claims, characterised in that the end portion of each tube of said series of radial tubes (27) bends in a direction parallel to the axis of said surface (25) of sliding for the articles.

9. In an assembly for distribution of loose articles in a bagging machine a distributor according to any claim from 3 to 8, characterised in that said series of radial tubes (27) is arranged symmetrically along said truncated cone band (27).

10. In an assembly for distribution of loose articles in a bagging machine a distributor according to the previous claim, characterised in that said series of radial tubes (27) comprises at least eight radial tubes.

11. An assembly for distribution of loose articles in a bagging machine according to any one of the previous claims, characterised in that each tube of said series of radial tubes (27) feeds a corresponding underlying channel of said series of radial channels (13) for transfer of the articles.

12. An assembly for distribution of loose articles in a bagging machine according to the previous claim, characterised in that the outlet mouth (33) of said bent end portion (31) of each radial tube (27) is positioned at a preset distance from the base of said corresponding radial channel (13) below, and faces onto a substantially central section (37) of the same (13).

13. An assembly for distribution of loose articles in a bagging machine according to any one of the previous claims, characterised in that the bent end portion (31) of each radial tube (27) is provided with a corresponding part for regulation of the quantity of articles to be fed to said corresponding radial channel (13) for transfer of the articles.

14. An assembly for distribution of loose articles in a bagging machine according to the previous claim, characterised in that said part for regulation of each radial tube (27) is in the form of an annular extension (39) of said bent end portion (31), mounted, sliding vertically, on the external wall of said bent end portion (31) of said radial tube (27) and protractile from the end of said end portion (31) towards the base of the corresponding radial channel (13) below, so that the distance between said outlet mouth (33) of said bent end portion (31) and the base of said corresponding radial channel (13) below can be regulated.

15. An assembly for distribution of loose articles in a bagging machine according to the previous claim, characterised in that a member is provided for controlling said annular extension (39) manually operated in order to regulate the quantity of articles which, from said radial tube (27), enter said corresponding radial channel (13) for transfer of said articles.

16. A bagging machine characterised in that it uses a distributor (15) according to one of previous claims.

17. A bagging machine according to the previous claim characterised in that said distributor (15) is removably attached to the framework of said bagging machine.
